# EUROPÄISCHE PATENTSCHRIFT

(11) **EP 4 038 600 B1**
(45) Veröffentlichungstag und Bekanntmachung des Hinweises auf die Patenterteilung: **27.05.2026**
(21) Anmeldenummer: 20775246.0
(22) Anmeldetag: 16.09.2020
(51) Int. Cl.: G08G 1/0962, G01C 21/32, G01C 21/34, G08G 1/01, G08G 1/0967, G08G 1/095, G08G 1/096

(54) **GÜTEBESTIMMUNGSVERFAHREN, GÜTEBESTIMMUNGSVORRICHTUNG, KRAFTFAHRZEUG**
QUALITY DETERMINING METHOD, QUALITY DETERMINING DEVICE, AND MOTOR VEHICLE
PROCÉDÉ DE DÉTERMINATION DE QUALITÉ, DISPOSITIF DE DÉTERMINATION DE QUALITÉ ET VÉHICULE À MOTEUR

(30) Priorität: 01.10.2019 DE 102019215095
(43) Veröffentlichungstag der Anmeldung: 10.08.2022
(73) Patentinhaber: VOLKSWAGEN AKTIENGESELLSCHAFT, 38440 Wolfsburg (DE)
(72) Erfinder: KLOMP, Sven, 31311 Uetze / Dollbergen (DE); MAX, Stephan, 38518 Gifhorn (DE); FRANKE, Kai, 39576 Stendal (DE); BAUMANN, Peter, 38116 Braunschweig (DE); JÖRDENS, Christian, 38126 Braunschweig (DE)
(86) Internationale Anmeldenummer: PCT/EP2020/075916
(87) Internationale Veröffentlichungsnummer: WO 2021/063687

(56) Entgegenhaltungen:
- EP-B1- 2 979 261
- DE-A1- 102012 007 367
- DE-A1- 102012 216 788
- DE-A1- 102013 220 662
- DE-A1- 102016 111 371
- DE-A1- 102016 217 558
- US-B1- 8 527 199

## Beschreibung

Die Erfindung betrifft ein Gütebestimmungsverfahren für ein Verkehrssystem zur Anpassung der Geschwindigkeit eines Kraftfahrzeugs, eine Gütebestimmungsvorrichtung, und ein Kraftfahrzeug.

Im Allgemeinen sind Systeme bekannt, welche in Fahrzeugen integriert sind, um beispielsweise Ampelphasen oder andere Verkehrsdaten im Straßenverkehr zu erhalten, diese auszuwerten, und dergleichen.

Beispielsweise kann aus einem von einem Fahrzeug erhaltenen Umschaltzeitpunkt einer Signalanlage (z. B. Ampel) eine Annäherungsgeschwindigkeit an die Signalanlage angepasst, sodass das Fahrzeug nicht vor der Signalanlage anhalten muss, wodurch beispielsweise Benzin eingespart werden kann, eine subjektive Wartezeit verkürzt werden kann, und dergleichen.

Beispielsweise ist aus der Offenlegungsschrift US 2014/0055288 ein Verfahren bekannt, welches eine Eigenschaft, welche abgeleitet ist aus Nachrichten von einer Signalanlage, überprüft und diese mit einer selbst aufgenommenen Eigenschaft vergleicht. Hier könnte es jedoch bei Empfangsstörungen, einer fehlerhaften Signalerstellung (beispielsweise durch einen Kalibrierungsfehler, einer schlechten Prädiktion, und dergleichen) zu einem falschen Ergebnis kommen. Des Weiteren kann so keine statistische Aussage über die Signalanlage getroffen werden.

Aus der Offenlegungsschrift US 2018/0150086 ist ein Verfahren bekannt, um Signalphasendaten mit Bewegungsdaten von Fahrzeugen zu vergleichen. Jedoch werden hier nicht die Daten von einer Vielzahl von Verkehrsteilnehmern verwendet.

Die Offenlegungsschrift DE 10 2012 216 788 A1 beschreibt ein Verfahren und ein System zum Erhalten von Qualitätsdaten betreffend Informationen über Schaltzeiten und/oder Schaltbedingungen von Ampeln und/oder Wechselverkehrszeichen

Aufgabe der vorliegenden Erfindung ist es, ein Gütebestimmungsverfahren, eine Gütebestimmungsvorrichtung, und ein Kraftfahrzeug bereitzustellen, welche die oben genannten Nachteile wenigstens teilweise überwinden.

Diese Aufgabe wird durch das erfindungsgemäße Gütebestimmungsverfahren nach Anspruch 1, durch die erfindungsgemäße Gütebestimmungsvorrichtung nach Anspruch 10 und durch das erfindungsgemäße Kraftfahrzeug nach Anspruch 11 gelöst.

Weitere vorteilhafte Ausgestaltungen der Erfindung ergeben sich aus den Unteransprüchen und der folgenden Beschreibung bevorzugter Ausführungsbeispiele der vorliegenden Erfindung.

Wie oben diskutiert sind Systeme bekannt, wodurch Verkehrsdaten von einem Verkehrssystem erhalten werden können.

Es wurde jedoch erkannt, dass solche Systeme fehleranfällig oder ungenau sein können, wodurch eine komfortable, sparsame, umweltfreundliche, sichere, und/oder zügige Fahrt möglicherweise verhindert wird.

Des Weiteren können Daten (bspw. eine Konfidenz), welche von solchen Systemen übermittelt werden, auf unterschiedliche Arten und Weisen ausgewertet werden, sodass bei unterschiedlicher Auswertung der gleichen Daten, verschiedene Ergebnisse erzielt werden, was generell nicht wünschenswert ist.

Darüber hinaus wurde erkannt, dass es kein Verfahren gibt, um eine Korrektheit, Präzision, Qualität, Genauigkeit, und dergleichen der erhaltenen Daten zu bestimmen.

Deshalb betreffen manche Ausführungsbeispiele ein Gütebestimmungsverfahren für ein Verkehrssystem zur Anpassung der Geschwindigkeit eines Kraftfahrzeugs, umfassend:
Beziehen von ersten Verkehrsparameterdaten von dem Verkehrssystem, welche indikativ für einen Parameter des Verkehrssystems sind; wobei der Parameter wenigstens eine Verkehrssteuerungsinformation, insbesondere eine Ampelphase umfasst, wobei der Parameter ferner einen erwarteten Phasenwechsel der Ampelphase umfasst;
Beziehen von zweiten Verkehrsparameterdaten, welche indikativ für den Parameter des Verkehrssystems sind, wobei die zweiten Verkehrsparameterdaten von einer Vielzahl von Verkehrsteilnehmern stammen;
Ermitteln des Parameters aus den ersten Verkehrsparameterdaten;
Ermitteln des Parameters aus den zweiten Verkehrsparameterdaten; und
Vergleichen des aus den ersten Verkehrsparameterdaten ermittelten Parameters mit dem aus den zweiten Verkehrsparameterdaten ermittelten Parameter zum Bestimmen einer Güte der ersten Verkehrsparameterdaten;
Prädizieren des Phasenwechsels basieren auf dem aus den ersten Verkehrsparameterdaten ermittelten Parameters, wenn eine Güte oberhalb eines vorbestimmten Schwellwertes liegt; und Anpassen einer Geschwindigkeit basierend auf dem prädizierten Phasenwechsel.

Das Verkehrssystem kann eine beliebige Anordnung von Elementen an einem Verkehrsweg (zu Land oder zu Wasser) sein, welche dazu eingerichtet sind, einen Verkehrsfluss zu regeln.

Ein Element kann in diesem Zusammenhang eine Signalanlage sein, wie beispielsweise eine Ampel oder ein Ampelsystem, ein Kreisverkehr mit einer entsprechenden Regelungstechnik, eine akustische Signalanlage, eine haptische Signalanlage, eine Signalanlage, welche auf elektromagnetischen Signalen beruht (d.h. ohne dass ein für einen Straßenverkehrsteilnehmer erfassbarer Reiz gesendet wird, z. B. für ein autonom fahrendes Fahrzeug), und dergleichen, wobei auch eine Kombination von mehreren unterschiedlichen Elementen erfindungsgemäß sein kann.

Das Verkehrssystem kann beispielsweise an einer Verkehrsstraße implementiert sein, welche wenigstens eine Lichtsignalanlage (z. B. eine Ampel) aufweist.

Das Verkehrssystem kann ferner eine Steuerungsanordnung umfassen, welche dazu eingerichtet ist, Daten zu erfassen, abzuschätzen, zu ermitteln, zu akquirieren, und/oder zu senden, welche für wenigstens ein ausgesendetes Signal, eine Verkehrssteuerungsinformation, und dergleichen (z. B. eine Ampelphase), indikativ ist.

Ein erfindungsgemäßes Gütebestimmungsverfahren bezieht erste Verkehrsparameterdaten. Die ersten Verkehrsparameterdaten werden beispielsweise von der Steuerungsanordnung bereitgestellt und können den oben beschriebenen Daten entsprechen.

Beispielsweise kann die Steuerungsanordnung eine Ampelphase wenigstens einer Ampel des Verkehrssystems ermitteln und eine Abschätzung liefern, wie lange diese Ampelphase (noch) andauern wird.

Diese Abschätzung kann als erste Verkehrsparameterdaten in einem erfindungsgemäßen Gütebestimmungsverfahren von dem Verkehrssystem bezogen werden.

Beispielsweise kann das Verkehrssystem die ersten Verkehrsparameterdaten (zyklisch) aussenden, sodass in einem erfindungsgemäßen Gütebestimmungsverfahren die ersten Verkehrsparameterdaten empfangen werden.

Das Beziehen kann jedoch auch ein Senden einer Anfrage an das Verkehrssystem umfassen, sodass das Verkehrssystem, in Reaktion auf die Anfrage, die ersten Verkehrsparameterdaten bereitstellt.

Des Weiteren kann, in manchen Ausführungsbeispielen, das Beziehen umfassen, dass die ersten Verkehrsparameterdaten heruntergeladen werden (bspw. von einem Server).

In einem erfindungsgemäßen Gütebestimmungsverfahren kann das Beziehen auch durch eine Kombination aus wenigstens zwei Arten des Beziehens geschehen. Beispielsweise kann ein Teil der ersten Verkehrsparameterdaten (zyklisch) von dem Verkehrssystem ausgesendet werden, während ein anderer Teil durch eine Anfrage bereitgestellt wird, und dergleichen.

Die ersten Verkehrsparameterdaten sind indikativ für einen Parameter des Verkehrssystems sein, d. h. in einem erfindungsgemäßen Gütebestimmungsverfahren kann aus den ersten Verkehrsparameterdaten der Parameter bestimmt werden.

Wie bereits diskutiert kann ein Parameter eine Ampelphase umfassen. Des Weiteren umfasst ein Parameter eine (abgeschätzte oder definierte) Zeit, bei welcher sich die Ampelphase zu einer anderen Ampelphase ändert. Darüber hinaus kann der Parameter eine Straßentopologie, eine Fahrspurinformation, eine empfohlene Geschwindigkeit, eine wahrscheinliche Zeit bis zu einem Phasenwechsel und eine Konfidenz umfassen.

In manchen Ausführungsbeispielen wird eine Konfidenz eines Signals (bspw. ein geschätzter Messfehler) mit einer wahrscheinlichen Zeit bis zu einem Phasenwechsel verglichen.

In manchen Ausführungsbeispielen wird überprüft, ob die ersten Verkehrsparameterdaten mit einer erforderlichen Frequenz (bspw. basierend auf einem vorgegebenen Standard) gesendet werden.

Generell sind die ersten Verkehrsparameterdaten nicht darauf beschränkt, indikativ für genau einen Parameter zu sein, denn in einem erfindungsgemäßen Gütebestimmungsverfahren kann auch eine Vielzahl (d. h. mindestens einer) von Parametern aus den ersten Verkehrsparameterdaten ermittelt werden.

Das erfindungsgemäße Gütebestimmungsverfahren umfasst weiterhin ein Beziehen von zweiten Verkehrsparameterdaten.

Die zweiten Verkehrsparameterdaten können eine gleiche oder eine andere Datenstruktur als die ersten Verkehrsparameterdaten umfassen, jedoch ist typischerweise eine Bezugsquelle der zweiten Verkehrsparameterdaten verschieden als die ersten Verkehrsparameterdaten.

Erfindungsgemäß werden die zweiten Verkehrsparameterdaten von einer Vielzahl von Verkehrsteilnehmern bezogen, bzw. die Vielzahl von Verkehrsteilnehmern stellt die zweiten Verkehrsparameterdaten auf einem entfernten Server oder dergleichen bereit.

Ein Verkehrsteilnehmer kann generell jedes beliebige Fahrzeug sein, welches von dem Verkehrssystem geregelt wird, wie zum Beispiel ein Kraftfahrzeug, ein Kraftrad, ein Fußgänger (welcher mit einem entsprechenden Gerät ausgestattet ist, um die ersten und zweiten Verkehrsparameterdaten bereitzustellen), ein Fahrrad, und dergleichen.

Generell kann jeder Verkehrsteilnehmer dazu eingerichtet sein (oder eine entsprechende Vorrichtung haben), sowohl das erfindungsgemäße Gütebestimmungsverfahren auszuführen, als auch die zweiten Verkehrsparameterdaten bereitzustellen.

Die zweiten Verkehrsparameterdaten können durch eine Vorrichtung ermittelt werden, welche mit einem (oder vielen) Verkehrsteilnehmer(n) assoziiert ist.

Beispielsweise kann jeder der Vielzahl der Verkehrsteilnehmer mit einer Kamera oder dergleichen ausgestattet sein, sodass jeder Verkehrsteilnehmer Ampelphasen einer Ampelanlage mit einer entsprechenden Spurzuordnung aufnehmen kann, welche als zweite Verkehrsparameterdaten an eine Vorrichtung gesendet werden, welche dazu eingerichtet ist, ein erfindungsgemäßes Gütebestimmungsverfahren auszuführen.

In manchen Ausführungsbeispielen werden die zweiten Verkehrsparameterdaten, wenn sie von einer Vielzahl von Verkehrsteilnehmern stammen, also als eine Vielzahl von Datensätzen vorliegen, zunächst zu einem Datensatz zusammengefasst, beispielsweise indem eine statistische Analyse (Akkumulation, Bildung eines Mittelwerts, Bestimmung eines Messfehlers, und dergleichen) durchgeführt wird.

In manchen Ausführungsbeispielen wird zunächst aus der Vielzahl von Datensätzen eine Vielzahl von Parametern ermittelt, sodass aus der Vielzahl von Parametern, beispielsweise durch eine statistische Analyse, ein finaler Parameter bestimmt werden kann.

Erfindungsgemäß umfasst das Gütebestimmungsverfahren des Weiteren ein Ermitteln des Parameters aus den ersten Verkehrsparameterdaten und ein Ermitteln des Parameters aus den zweiten Verkehrsparameterdaten, wie bereits diskutiert.

Des Weiteren umfasst das erfindungsgemäße Gütebestimmungsverfahren ein Vergleichen des aus den ersten Verkehrsparameterdaten ermittelten Parameters mit dem aus den zweiten Verkehrsparameterdaten ermittelten Parameter.

Das Vergleichen kann eine Bestimmung einer Abweichung, einer Differenz, eines Quotienten, einer Rate, einer Signifikanz, und dergleichen umfassen, was eine Aussage darüber zulässt, ob und inwieweit der aus den ersten Verkehrsparameterdaten ermittelte Parameter von den aus den zweiten Verkehrsparameterdaten ermittelte Parameter abweicht.

Daraus wird eine Güte der ersten Verkehrsparameterdaten bestimmt. Beispielsweise können die ersten Verkehrsparameterdaten fehlerhaft sein (beispielsweise durch eine fehlerhafte Ampel-Spur-Zuordnung, eine ungenaue Abschätzung einer Ampelphase, und dergleichen), sodass der aus den ersten Verkehrsparameterdaten ermittelte Parameter ebenfalls fehlerhaft ist. Wenn die bestimmte Abweichung und dergleichen oberhalb eines vorgegebenen Schwellwerts ist, kann daraus bestimmt werden, dass die Güte der ersten Verkehrsparameterdaten unzureichend ist, oder, wenn die bestimmte Abweichung und dergleichen unterhalb (oder gleich) des vorgegeben Schwellwertes ist, kann daraus eine ausreichende Güte der ersten Verkehrsparameterdaten bestimmt werden.

Deshalb umfasst das Gütebestimmungsverfahren in manchen Ausführungsbeispielen ferner: Bestimmen der Güte der ersten Verkehrsparameterdaten basierend auf dem Vergleich; und Entscheiden, anhand der Güte, ob die ersten Verkehrsparameterdaten bei einer künftigen Nutzung des Verkehrssystems in Betracht gezogen werden.

Die Güte kann generell ein numerischer Wert sein, eine Bezeichung (wie z. B. ausreichend), und dergleichen.

Wenn die Güte als unzureichend bestimmt wird oder wenn sie unterhalb eines vorgegebenen Wertes liegt, kann entschieden werden, dass, wenn ein Verkehrsteilnehmer das Verkehrssystem zu einem Zeitpunkt nutzt, welcher nach der Bestimmung der Güte liegt, die ersten Verkehrsparameterdaten nicht in Betracht gezogen werden.

Beispielsweise, wenn die ersten Verkehrsparameterdaten indikativ für eine Wartezeit an einer Ampel sind, kann bei einer unzureichenden Güte entschieden werden, dass die Wartezeit einem Insassen (bspw. ein Fahrer) des Verkehrsteilnehmers nicht angezeigt wird, da davon auszugehen ist, dass die Wartezeit, welche aus den ersten Verkehrsparameterdaten ermittelt wurde, falsch ist.

Dies kann beispielsweise über Geofencing geschehen.

In manchen Ausführungsbeispielen kann dies über einen Index (bspw. Blacklist) geschehen, in welchem beispielsweise jede Ampel mit einer eindeutigen Kennung (bspw. ID) aufgeführt ist, sodass durch eine Identifikation der Kennung, auf eine Position geschlossen werden kann. Wenn die Güte ausreichend ist, kann die Wartezeit angezeigt werden.

In manchen Ausführungsbeispielen umfasst der Vergleich eine Ermittlung einer statistischen Abweichung des aus den ersten Verkehrsparameterdaten ermittelten Parameters mit dem aus den zweiten Verkehrsparameterdaten ermittelten Parameters.

Die statistische Abweichung kann auf einem Stichprobentest zwischen dem aus den ersten Verkehrsparameterdaten ermittelten Parameter und dem aus den zweiten Verkehrsparameterdaten ermittelten Parameter basieren, wie zum Beispiel ein t-Test, ein Chi-Quadrat-Test, ein Signifikanztest, und dergleichen.

Aus der ermittelten statistischen Abweichung oder aus einem Signifikanzwert, und dergleichen, kann dann die Güte bestimmt werden.

In manchen Ausführungsbeispielen umfasst der Vergleich eine Gegenüberstellung einer ermittelten tatsächlichen Zuordnung von Fahrspuren zu einer Signalanlage und einer von dem Verkehrssystem bereitgestellten Zuordnung von Fahrspuren zu der Signalanlage, sodass bei einer Abweichung der beiden Zuordnungen bei einer künftigen Nutzung des Verkehrssystems die ersten Verkehrsparameterdaten nicht in Betracht gezogen werden.

Erfindungsgemäß umfasst der Parameter wenigstens eine Verkehrssteuerungsinformation (z. B. eine Ampelphase), wie bereits diskutiert.

In manchen Ausführungsbeispielen ist die wenigstens eine Verkehrssteuerungsinformation mit einer Fahrspurinformation assoziiert, wie hierin beschrieben.

In manchen Ausführungsbeispielen, in welchen die wenigstens eine Verkehrssteuerungsinformation eine oder mehrere Ampelphasen umfasst, umfasst der Parameter ferner einen erwarteten Phasenwechsel der Ampelphase.

Erfindungsgemäß umfasst das Gütebestimmungsverfahren ferner: Prädizieren des Phasenwechsels basierend auf dem aus den ersten Verkehrsparameterdaten ermittelten Parameters, wenn eine Güte oberhalb eines vorbestimmten Schwellwertes liegt. Dies kann der Fall sein, wenn eine wahrscheinliche Wartezeit bzw. eine Wahrscheinlichkeit für einen zukünftigen Phasenwechselzeitpunkt als Parameter aus den ersten Verkehrsparameterdaten ermittelt wird. Ist eine Güte oberhalb eines vorgegebenen Wertes, so kann aus der gegebenen Wahrscheinlichkeit ein Phasenwechsel mit einer (vorgegebenen) Genauigkeit vorhergesagt (prädiziert) werden, welche von der Güte abhängen kann.

In manchen Ausführungsbeispielen umfasst das Gütebestimmungsverfahren ferner: Übermitteln des prädizierten Phasenwechsels.

Der prädizierte Phasenwechsel kann beispielsweise an einen entfernten Server übermittelt werden durch Netzwerkschnittstellen, Radioprotokolle (z. B. mobiles Internet), und dergleichen, sodass andere Verkehrsteilnehmer auf diese Information zugreifen können, sodass vorteilhafterweise nicht jeder Verkehrsteilnehmer ein erfindungsgemäßes Gütebestimmungsverfahren durchführen muss.

Erfindungsgemäß umfasst das Gütebestimmungsverfahren ferner: Anpassen einer Geschwindigkeit basierend auf dem prädizierten Phasenwechsel. Beispielsweise kann sich ein Verkehrsteilnehmer an eine Ampel annähern, an welcher eine Weiterfahrt momentan nicht erlaubt ist. So kann eine Geschwindigkeit beispielsweise reduziert werden, sodass der Verkehrsteilnehmer nicht komplett zum Stehen gekommen sein muss, sodass er bei einer erlaubten Weiterfahrt nicht erneut anfahren muss, und dergleichen.

Das Anpassen der Geschwindigkeit kann jedoch auch ein Beschleunigen oder ein vollständiges Stehenbleiben umfassen.

In manchen Ausführungsbeispielen sind die zweiten Verkehrsparameterdaten Schwarmdaten, wobei nicht nur die Vielzahl von Verkehrsteilnehmern ein Teil des Schwarms sein müssen, sondern auch andere Systeme, welche dazu eingerichtet sind, ein erfindungsgemäßes Gütebestimmungsverfahren auszuführen, wie beispielsweise ein Verkehrsüberwachungssystem, ein Mobiltelefon, und dergleichen, wodurch vorteilhafterweise eine Genauigkeit des aus den zweiten Verkehrsparameterdaten ermittelten Parameters erhöht wird.

In manchen Ausführungsbeispielen umfassen die die ersten Verkehrsparameterdaten Signalphasen- und Zeitdaten.

In manchen Ausführungsbeispielen umfassen die ersten Verkehrsparameterdaten Straßentopologiedaten.

Wie generell bekannt können Verkehrssysteme standardisierte Signale übermitteln, wie beispielweise SPaT-Daten (Signal Phase and Time, dt: Signalphasen- und Zeitdaten) und Straßentopologiedaten (MAP) nach ISO TS 19091, sodass vorteilhafterweise bekannte erste Verkehrsparameterdaten verwendet werden können, um ein erfindungsgemäßes Gütebestimmungsverfahren auszuführen.

Beispielsweise kann ein Verkehrssystem (z. B. eine Ampel) Informationen darüber bereitstellen, ob und wie viele Personen an einer Straßenkreuzung sind, sowie Umschaltzeitpunkte (Phasenwechsel) übermitteln, beispielsweise über ein pWLAN (public wireless local area network).

Diese Informationen (bzw. erfindungsgemäße erste Verkehrsparameterdaten) können, in manchen Ausführungsbeispielen, über eine Mobilfunkverbindung (z. B. Radioprotokolldaten) oder, wie diskutiert, über eine Direktkommunikation, wie bspw. pWLAN, an ein Fahrzeug übermittelt werden.

Eine Verifizierung einer Quelle, welche die ersten Verkehrsparameterdaten bereitstellt, kann mittels einer Public Key Infrastruktur (PKI) und/oder mit einer Signierung der ersten Verkehrsparameterdaten erfolgen.

In manchen Ausführungsbeispielen sind die ersten Verkehrsparameterdaten (im Fall von MAP) indikativ für einen Aufbau einer Kreuzung, wie zum Beispiel eine Anordnung von Fahrspuren und welcher Fahrtrichtung diese zugeordnet sind (z. B. getrennte Linksabbiegerspur, gemeinsame Rechts-Geradeaus-Spur, und dergleichen), und/oder indikativ für Ampelsignalgruppen mit einer Zuordnung zu der Anordnung von Fahrspuren, bspw. welche Fahrspur mit welcher Ampelsignalgruppe assoziiert ist.

In manchen Ausführungsbeispielen sind die ersten Verkehrsparameterdaten (im Fall von SPaT) indikativ für aktuelle Phaseninformationen der einzelnen Ampelsignalgruppen. Außerdem kann eine Abschätzung des nächsten Umschaltzeitpunktes enthalten sein.

In manchen Ausführungsbeispielen sind die ersten Verkehrsparameterdaten eine Kombination aus MAP- und SPaT-Daten.

In manchen Ausführungsbeispielen kann mittels solcher Informationen eine optimale Annäherungsgeschwindigkeit an eine Ampel bestimmt werden, sodass vorteilhafterweise Kraftstoff eingespart werden kann.

Sollte ein Fahrer eines Kraftfahrzeugs bereits an einer Kreuzung stehen, kann der Fahrer über eine Restwartezeit informiert werden. So kann vorteilhafterweise eine subjektive Wartezeit verkürzt werden.

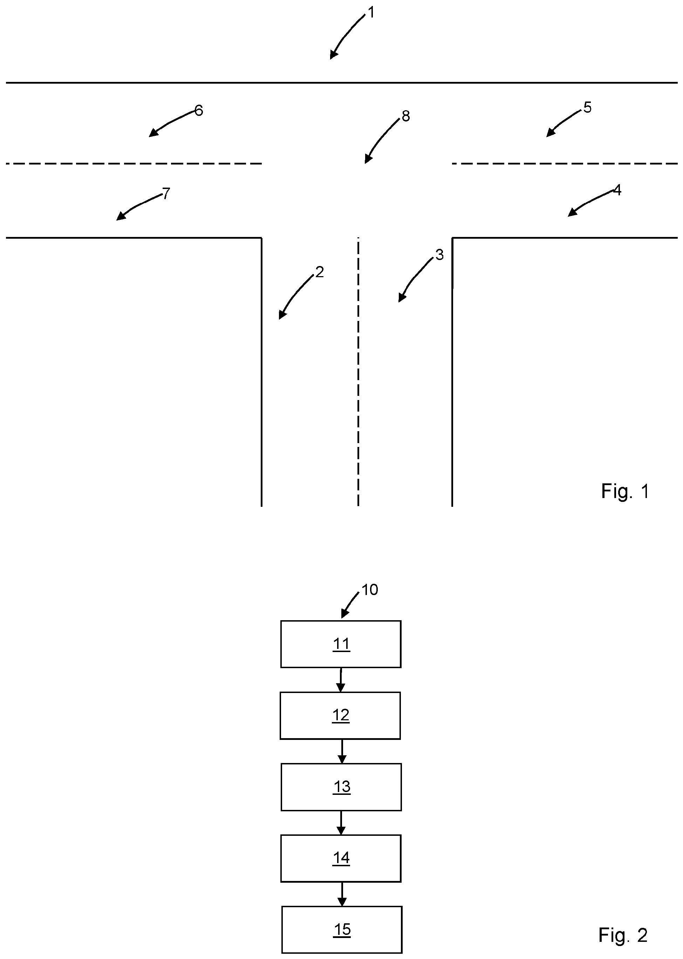

Fig. 1 zeigt eine Straßenkreuzung 1 mit mehreren Spuren 2 bis 7 und eine Konfliktzone 8, wobei eine Durchfahrt durch die Konfliktzone 8 durch eine zu jeder Spur zugeordneten Ampel (nicht abgebildet) gesteuert wird.

Informationen über die Spuren 2 bis 7 sind in den Straßentopologiedaten enthalten, während Phaseninformationen in den Signalphasen- und Zeitdaten enthalten sind, sodass die Durchfahrt durch Konfliktzone 8 durch eine Kombination von Straßentopologiedaten und Signalphase- und Zeitdaten, gesteuert wird.

In manchen Ausführungsbeispielen wird, basierend auf den Straßentopologiedaten (erste Verkehrsparameterdaten), eine Straßentopologie ermittelt, das heißt, dass beispielsweise eine Ampel einer Fahrspur zugeordnet wird, wobei die Straßentopologie ferner mit einem tatsächlich gefahrenen Weg (aus zweiten Verkehrsparameterdaten) ermittelt wird.

Der tatsächlich gefahrene Weg kann über Geodaten (beispielsweise GPS), Odometrie, und dergleichen ermittelt werden.

Der tatsächliche Weg kann auch anhand ermittelter Fahrmanöver (links, rechts, geradeaus, und dergleichen) ermittelt werden.

So kann eine Güte von Straßentopologiedaten bestimmt werden.

In manchen Ausführungsbeispielen werden die Signalphase- und Zeitdaten (erste Verkehrsparameterdaten) mit einer visuellen Überprüfung einer aktuellen Phase basierend auf einer Kamera (wodurch zweite Verkehrsparameterdaten akquiriert werden) verglichen.

So kann eine Güte der Signalphase- und Zeitdaten bestimmt werden.

Des Weiteren kann auch eine fehlgeschlagene Signalgruppenzuordnung zwischen Straßentopologiedaten und Signalphase- und Zeitdaten erfolgen, was vorteilhafterweise durch die Bestimmung der Güte der Straßentopologiedaten und der Signalphase- und Zeitdaten überprüft werden kann.

Hierbei kann überprüft werden, ob alle erforderlichen Signalgruppen (bzw. Ampelanlagen) eines Verkehrssystems sowohl in den Straßentopologiedaten als auch in den Signalphase- und Zeitdaten enthalten sind.

Des Weiteren können Revisionssummen der Straßentopologiedaten und der Signalphase- und Zeitdaten verglichen werden.

Des Weiteren können, wie allgemein bekannt ist, Pflichtfelder (basierend auf einem Standard) sowohl in den Straßentopologiedaten als auch in den Signalphase- und Zeitdaten enthalten sein, wobei in manchen Ausführungsbeispielen jeweils ermittelt werden kann, ob alle Pflichtfelder gesendet bzw. empfangen werden, sodass die Güte vorteilhafterweise besser bestimmbar wird.

Generell kann bei einer festgestellten Güte, welche unterhalb eines vorbestimmten Schwellwertes liegt, in einem Kraftfahrzeug ein Empfangen von ersten Verkehrsparameterdaten von einem Verkehrssystem deaktiviert werden.

In manchen Ausführungsbeispielen umfasst das Gütebestimmungsverfahren ferner: Anpassen einer Routenführung basierend auf dem Parameter.

Beispielsweise kann festgestellt werden, dass eine falsche Ampel-Spur-Zuordnung in den ersten Verkehrsparameterdaten stattgefunden hat.

Dies kann dazu führen, dass, wenn es zwei alternative (ohne Ampeln gleich schnelle) Routen zu einem Ziel gibt, dass ein Verkehrsteilnehmer lange an einer Ampel warten müsste, wenn durch eine falsche Ampel-Spur-Zuordnung eine Navigation des Verkehrsteilnehmer fehlerhaft ist.

Eine Routenführung (also eine Navigation) kann dann dadurch angepasst werden, dass die Ampel-Spur-Zuordnung korrigiert wird, sodass eine alternative (schnellere) Route berechnet werden kann.

Manche Ausführungsbeispiele betreffen eine Gütebestimmungsvorrichtung, welche dazu eingerichtet ist, ein erfindungsgemäßes Gütebestimmungsverfahren auszuführen.

Die Gütebestimmungsvorrichtung kann eine Schaltanordnung in einem Kraftfahrzeug sein. Beispielsweise kann eine Gütebestimmungsvorrichtung Elemente haben, welche dazu eingerichtet sind, das Gütebestimmungsverfahren auszuführen.

Beispielsweise kann die Gütebestimmungsvorrichtung eine Netzwerkschnittstelle aufweisen zum Beziehen der ersten Verkehrsparameterdaten, ein Bilderfassungselement zum Beziehen der zweiten Verkehrsparameterdaten, einen Prozessor zum Ermitteln des Parameters aus den ersten und aus den zweiten Verkehrsparameterdaten und zum Vergleichen der ermittelten Parameter, ohne die vorliegende Erfindung darauf zu beschränken. Beispielsweise kann das Verfahren auch von einem in einem Kraftfahrzeug integrierten zentralen Bordcomputer, und dergleichen ausgeführt werden.

Manche Ausführungsbeispiele betreffen ein Kraftfahrzeug, welches eine erfindungsgemäße Gütebestimmungsvorrichtung umfasst.

Das Kraftfahrzeug kann jedes beliebige durch einen Motor (z. B. Verbrennungsmaschine, Elektromaschine, etc.) betriebene Fahrzeug bezeichnen, wie zum Beispiel ein Automobil, ein Motorrad, einen Lastkraftwagen, einen Omnibus, land- oder forstwirtschaftliche Zugmaschinen welches an einem Verkehrsfluss teilnimmt.

In manchen Ausführungsbeispielen erfolgt ein erfindungsgemäßes Gütebestimmungsverfahren in einem Fahrzeug (bspw. über Direktkommunikation). Jedoch ist die vorliegende Offenbarung nicht darauf zu beschränken, denn die ersten und zweiten Verkehrsparameterdaten können durch ein Backend (bspw. ein entfernter Server) bereitgestellt werden oder auch in dem (oder in einem anderen) Backend erfolgen, sodass ein erfindungsgemäßes Kraftfahrzeug auch dazu eingerichtet sein kann, zweite Verkehrsparameterdaten (z. B. von einer Kamera aufgenommene Ampelphasen) an das Backend zu übermitteln (bspw. über Mobilfunk).

Ausführungsbeispiele der Erfindung werden nun beispielhaft und unter Bezugnahme auf die beigefügte Zeichnung beschrieben, in der:
Fig. 1 schematisch ein Ausführungsbeispiel eine Straßenkreuzung, an der ein erfindungsgemäßes Gütebestimmungsverfahren durchgeführt werden kann;
Fig. 2 ein erfindungsgemäßes Gütebestimmungsverfahren;
Fig. 3 ein Koordinatensystem zum Vergleichen des aus den ersten Verkehrsparameterdaten ermittelten Parameters mit dem aus den zweiten Verkehrsparameterdaten ermittelten Parameter;
Fig. 4 ein Balkendiagramm, welches eine Präzision einer vorhergesagten Zeit darstellt und;
Fig. 5 ein erfindungsgemäßes Kraftfahrzeug mit einer erfindungsgemäßen Gütebestimmungsvorrichtung zeigt.

Ein Ausführungsbeispiel eines erfindungsgemäßen Gütebestimmungsverfahrens 10 ist in Fig. 2 dargestellt.

In 11 werden erste Verkehrsparameterdaten bezogen, wie hierin beschrieben.

In 12 werden zweite Verkehrsparameterdaten bezogen, wie hierin beschrieben.

In 13 wird der Parameter aus den ersten Verkehrsparameterdaten ermittelt, wie hierin beschrieben.

In 14 wird der Parameter aus den zweiten Verkehrsparameterdaten ermitteln, wie hierin beschrieben.

In 15 wird der aus den ersten Verkehrsparameterdaten ermittelte Parameter mit dem aus den zweiten Verkehrsparameterdaten ermittelte Parameter verglichen, wie hierin beschrieben.

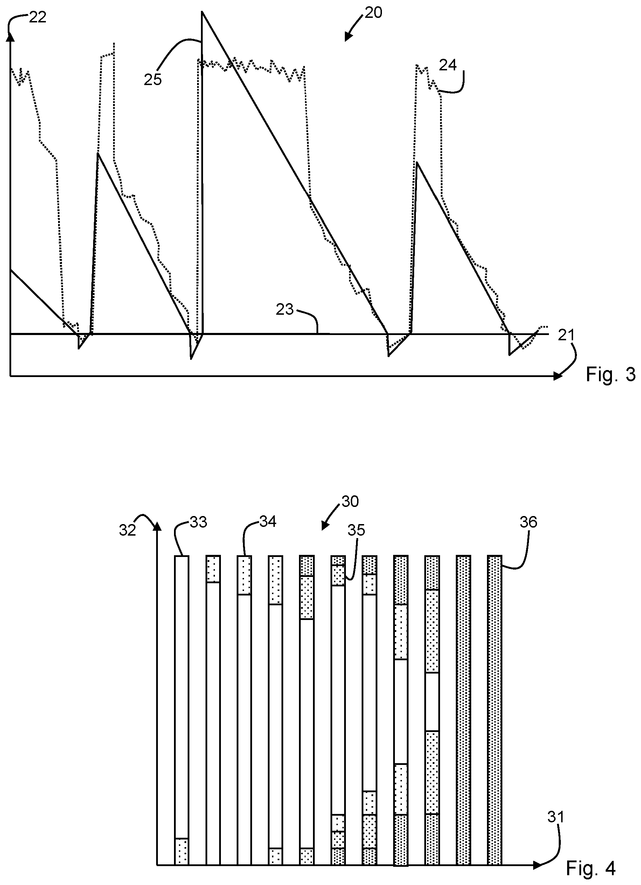

Fig. 3 zeigt ein Koordinatensystem 20, auf welchem auf einer Abszisse 21 eine vergangene Zeit aufgetragen und, und auf welchem auf einer Ordinate 22 eine Zeit bis zu einem Phasenwechsel einer Ampel dargestellt ist.

Zur Vereinfachung sind hier zwei Ampelphasen dargestellt, jedoch ist die vorliegende Erfindung nicht auf zwei Ampelphasen beschränkt.

Des Weiteren ist eine Nulllinie 23 dargestellt, wobei Werte unterhalb der Nulllinie 23 auf eine Ampelphase deuten, welche einen Verkehrsteilnehmer zum Anhalten veranlasst (z. B. rot) und Werte oberhalb der Nulllinie 23 auf eine Ampelphase hindeuten, welche den Verkehrsteilnehmer für eine Weiterfahrt veranlasst (z. B. grün).

Das Koordinatensystem 20 enthält außerdem eine wahrscheinliche Zeit 24 (gepunktete Linie), zu welchem ein Phasenwechsel stattfinden soll, welche auf einer erfindungsgemäßen Ermittlung aus ersten Verkehrsparameterdaten beruht, die von einer Signallichtanlage (als erfindungsgemäßes Verkehrssystem) übermittelt wurden.

Ferner enthält das Koordinatensystem 20 eine reale Zeit 25 (durchgezogene Linie), zu dem ein Phasenwechsel stattfindet, welche auf einer erfindungsgemäßen Ermittlung aus zweiten Verkehrsparameterdaten beruht, die von Schwarmdaten aus einer Vielzahl von Verkehrsteilnehmern stammen.

Die zweiten Verkehrsparameterdaten sind hierbei durch eine Überwachung des Verkehrssystems durch die Vielzahl der Verkehrsteilnehmer ermittelt worden, während die ersten Verkehrsparameterdaten auf einer Abschätzung einer Wahrscheinlichkeit beruhen, wann ein Phasenwechsel stattfindet.

So kann ein erfindungsgemäßer Vergleich der wahrscheinlichen Zeit 24 (als aus den ersten Verkehrsparameterdaten ermittelter Parameter) und der realen Zeit 25 (als aus den zweiten Verkehrsparameterdaten ermittelter Parameter) stattfinden.

Fig. 4 zeigt ein Balkendiagramm 30, wobei auf einer Abszisse 31 eine vorhergesagte Zeit (als aus den ersten Verkehrsparameterdaten ermittelter Parameter) vor einem Phasenwechsel dargestellt ist, und wobei auf einer Ordinate 32 eine Präzision der vorhergesagten Zeit im Vergleich zu einer tatsächlichen Zeit (als aus den zweiten Verkehrsparameterdaten ermittelter Parameter) dargestellt ist.

Die Balken des Balkendiagramms 30 haben verschiedene Füllstärken 33 bis 36, wobei die Füllstärke 33 (keine Füllung) eine Präzision von weniger als eine Sekunde darstellt. Das heißt, dass die tatsächliche Zeit eine Sekunde länger oder kürzer ist als die vorhergesagte Zeit.

Die Füllstärke 34 stellt eine Präzision von weniger als zwei Sekunden dar. Die Füllstärke 35 stellt eine Präzision von weniger als drei Sekunden dar. Die Füllstärke 36 stellt eine Präzision von weniger als fünf Sekunden dar.

Ist in dem Balkendiagramm 30 eine Füllstärke oberhalb einer anderen Füllstärke, so bedeutet dies, dass die vorhergesagte Zeit länger ist als die tatsächliche Zeit. Ist eine Füllstärke unterhalb einer anderen Füllstärke, so bedeutet dies, dass die vorhergesagte Zeit kürzer ist als die tatsächliche Zeit.

Beispielsweise sind an dem Balken des Balkendiagramms 30 ganz links neunzig Prozent aller Vorhersagen bis auf eine Sekunde genau, während die übrigen zehn Prozent bis zu zwei Sekunden zu kurz sind.

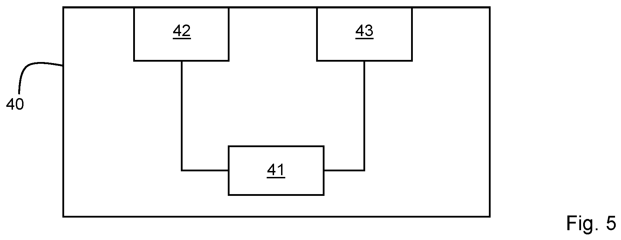

Fig. 5 zeigt ein erfindungsgemäßes Kraftfahrzeug 40, welches eine erfindungsgemäße Gütebestimmungsvorrichtung 41 aufweist, welche in diesem Ausführungsbeispiel als zentraler Bordcomputer ausgebildet ist, und welche dazu eingerichtet ist, ein erfindungsgemäßes Gütebestimmungsverfahren auszuführen.

Die Gütebestimmungsvorrichtung 41 steuert eine Netzwerkschnittstelle 42, durch welche erste und zweite Verkehrsparameterdaten empfangen werden. Des Weiteren steuert die Gütebestimmungsvorrichtung 41 eine Kameravorrichtung 43, welche dazu eingerichtet ist zweite Verkehrsparameterdaten (als Kameradaten) zu akquirieren, indem Ampelphasen aufgenommen werden.

So ist das Kraftfahrzeug 40 des Weiteren dazu eingerichtet, die zweiten Verkehrsparameterdaten über die Netzwerkschnittstelle 42 beispielsweise einem entfernten Server zur Verfügung zu stellen, sodass diese zu Schwarmdaten hinzugefügt werden können.

### Bezugszeichenliste

- 1: Straßenkreuzung
- 2 - 7: Spur
- 8: Konfliktzone
- 10: Gütebestimmungsverfahren
- 11: Beziehen erster Verkehrsparameterdaten
- 12: Beziehen zweiter Verkehrsparameterdaten
- 13: Ermittlung Parameter aus den ersten Verkehrsparameterdaten
- 14: Ermittlung Parameter aus den zweiten Verkehrsparameterdaten
- 15: Vergleichen des aus den ersten Verkehrsparameterdaten ermittelter Parameter mit aus den zweiten Verkehrsparameterdaten ermittelter Parameter
- 20: Koordinatensystem
- 21: Abszisse
- 22: Ordinate
- 23: Nulllinie
- 24: Wahrscheinliche Zeit
- 25: Reale Zeit
- 30: Balkendiagramm
- 31: Abszisse
- 32: Ordinate
- 33: Füllstärke für Präzision von weniger als eine Sekunde
- 34: Füllstärke für Präzision von weniger als zwei Sekunden
- 35: Füllstärke für Präzision von weniger als drei Sekunden
- 36: Füllstärke für Präzision von weniger als fünf Sekunden
- 40: Kraftfahrzeug
- 41: Gütebestimmungsvorrichtung
- 42: Netzwerkschnittstelle
- 43: Kameravorrichtung

## Patentansprüche

1. Gütebestimmungsverfahren (10) für ein Verkehrssystem (1) zur Anpassung der Geschwindigkeit eines Kraftfahrzeugs (40), umfassend:
Beziehen (11) von ersten Verkehrsparameterdaten von dem Verkehrssystem (1), welche indikativ für einen Parameter des Verkehrssystems (1) sind, wobei der Parameter wenigstens eine Verkehrssteuerungsinformation, insbesondere eine Ampelphase, umfasst, wobei der Parameter ferner einen erwarteten Phasenwechsel der Ampelphase umfasst;
Beziehen (12) von zweiten Verkehrsparameterdaten, welche indikativ für den Parameter des Verkehrssystems sind, wobei die zweiten Verkehrsparameterdaten von einer Vielzahl von Verkehrsteilnehmern stammen;
Ermitteln (13) des Parameters aus den ersten Verkehrsparameterdaten;
Ermitteln (14) des Parameters aus den zweiten Verkehrsparameterdaten;
Vergleichen (15) des aus den ersten Verkehrsparameterdaten ermittelten Parameters mit dem aus den zweiten Verkehrsparameterdaten ermittelten Parameter zum Bestimmen einer Güte der ersten Verkehrsparameterdaten;
Prädizieren des Phasenwechsels basierend auf dem aus den ersten Verkehrsparameterdaten ermittelten Parameters, wenn eine Güte oberhalb eines vorbestimmten Schwellwertes liegt; und
Anpassen der Geschwindigkeit basierend auf dem prädizierten Phasenwechsel.

2. Gütebestimmungsverfahren (10) nach Anspruch 1, ferner umfassend:
Bestimmen der Güte der ersten Verkehrsparameterdaten basierend auf dem Vergleich; und
Entscheiden, anhand der Güte, ob die ersten Verkehrsparameterdaten bei einer künftigen Nutzung des Verkehrssystems in Betracht gezogen werden.

3. Gütebestimmungsverfahren (10) nach Anspruch 1, wobei der Vergleich eine Ermittlung einer statistischen Abweichung des aus den ersten Verkehrsparameterdaten ermittelten Parameters mit dem aus den zweiten Verkehrsparameterdaten ermittelten Parameters umfasst.

4. Gütebestimmungsverfahren (10) nach Anspruch 1, wobei die wenigstens eine Verkehrssteuerungsinformation mit einer Fahrspurinformation (2 - 7) assoziiert ist.

5. Gütebestimmungsverfahren (10) nach Anspruch 1, ferner umfassend:
Übermitteln des prädizierten Phasenwechsels.

6. Gütebestimmungsverfahren (10) nach Anspruch 1, wobei die zweiten Verkehrsparameterdaten Schwarmdaten sind.

7. Gütebestimmungsverfahren (10) nach Anspruch 1, wobei die ersten Verkehrsparameterdaten Signalphasen- und Zeitdaten umfassen.

8. Gütebestimmungsverfahren (10) nach Anspruch 1, wobei die ersten Verkehrsparameterdaten Straßentopologiedaten umfassen.

9. Gütebestimmungsverfahren (10) nach Anspruch 1, ferner umfassend:
Anpassen einer Routenführung basierend auf dem Parameter.

10. Gütebestimmungsvorrichtung (41), welche dazu eingerichtet ist, ein Gütebestimmungsverfahren (10) nach einem der vorherigen Ansprüche auszuführen.

11. Kraftfahrzeug (40), welches eine Gütebestimmungsvorrichtung (41) nach Anspruch 10 umfasst.

## Claims

1. Quality determination method (10) for a traffic system (1), for adjusting the speed of a motor vehicle (40), comprising:
obtaining (11), from the traffic system (1), first traffic parameter data which are indicative of a parameter of the traffic system (1), wherein the parameter comprises at least one piece of traffic control information, in particular a traffic light phase, wherein the parameter further comprises an expected phase change of the traffic light phase;
obtaining (12) second traffic parameter data which are indicative of the parameter of the traffic system, wherein the second traffic parameter data originate from a plurality of road users;
ascertaining (13) the parameter from the first traffic parameter data;
ascertaining (14) the parameter from the second traffic parameter data;
comparing (15) the parameter ascertained from the first traffic parameter data with the parameter ascertained from the second traffic parameter data to determine the quality of the first traffic parameter data;
predicting the phase change based on the parameter ascertained from the first traffic parameter data when a quality is above a predetermined threshold value; and
adjusting the speed based on the predicted phase change.

2. Quality determination method (10) according to claim 1, further comprising:
determining the quality of the first traffic parameter data based on the comparison; and
deciding, based on the quality, whether the first traffic parameter data will be considered during future use of the traffic system.

3. Quality determination method (10) according to claim 1, wherein the comparison comprises ascertaining a statistical deviation of the parameter ascertained from the first traffic parameter data in relation to the parameter ascertained from the second traffic parameter data.

4. Quality determination method (10) according to claim 1, wherein the at least one piece of traffic control information is associated with a piece of lane information (2 - 7).

5. Quality determination method (10) according to claim 1, further comprising:
transmitting the predicted phase change.

6. Quality determination method (10) according to claim 1, wherein the second traffic parameter data are swarm data.

7. Quality determination method (10) according to claim 1, wherein the first traffic parameter data comprise signal phase data and time data.

8. Quality determination method (10) according to claim 1, wherein the first traffic parameter data comprise road topology data.

9. Quality determination method (10) according to claim 1, further comprising:
adjusting route guidance based on the parameter.

10. Quality determination device (41) which is designed to carry out a quality determination method (10) according to any of the preceding claims.

11. Motor vehicle (40) comprising a quality determination device (41) according to claim 10.

## Revendications

1. Procédé d'estimation de qualité (10) pour un système de circulation (1) pour l'adaptation de la vitesse d'un véhicule automobile (40), comprenant :
l'obtention (11), à partir du système de circulation (1), de premières données de paramètre de circulation indiquant un paramètre du système de circulation (1), dans lequel le paramètre comprend au moins une information de commande de circulation, en particulier une phase de feux de signalisation, dans lequel le paramètre comprend en outre un changement de phase attendu de la phase de feux de signalisation ;
l'obtention (12) de secondes données de paramètre de circulation indiquant le paramètre du système de circulation, dans lequel les secondes données de paramètre de circulation proviennent d'une pluralité d'usagers de la voie publique ;
la détermination (13) du paramètre à partir des premières données de paramètre de circulation ;
la détermination (14) du paramètre à partir des secondes données de paramètre de circulation ;
la comparaison (15) du paramètre déterminé à partir des premières données de paramètre de circulation avec le paramètre déterminé à partir des secondes données de paramètre de circulation pour l'estimation d'une qualité des premières données de paramètre de circulation ;
la prédiction du changement de phase sur la base du paramètre déterminé à partir des premières données de paramètre de circulation lorsqu'une qualité est supérieure à une valeur seuil prédéterminée ; et
l'adaptation de la vitesse sur la base du changement de phase prédit.

2. Procédé d'estimation de qualité (10) selon la revendication 1, comprenant en outre :
l'estimation de la qualité des premières données de paramètre de circulation sur la base de la comparaison ; et
le fait de décider, à l'aide de la qualité, si les premières données de paramètre de circulation seront prises en compte lors d'une utilisation future du système de circulation.

3. Procédé d'estimation de qualité (10) selon la revendication 1, dans lequel la comparaison comprend une détermination d'un écart statistique entre le paramètre déterminé à partir des premières données de paramètre de circulation et le paramètre déterminé à partir des secondes données de paramètre de circulation.

4. Procédé d'estimation de qualité (10) selon la revendication 1, dans lequel l'au moins une information de commande de circulation est associée à une information de voie de circulation (2 - 7).

5. Procédé d'estimation de qualité (10) selon la revendication 1, comprenant en outre :
la transmission du changement de phase prédit.

6. Procédé d'estimation de qualité (10) selon la revendication 1, dans lequel les secondes données de paramètre de circulation sont des données d'essaim.

7. Procédé d'estimation de qualité (10) selon la revendication 1, dans lequel les premières données de paramètre de circulation comprennent des données de phase de signal et des données temporelles.

8. Procédé d'estimation de qualité (10) selon la revendication 1, dans lequel les premières données de paramètre de circulation comprennent des données de topologie routière.

9. Procédé d'estimation de qualité (10) selon la revendication 1, comprenant en outre :
l'adaptation d'un guidage routier sur la base du paramètre.

10. Dispositif d'estimation de qualité (41), configuré pour mettre en œuvre un procédé d'estimation de qualité (10) selon l'une des revendications précédentes.

11. Véhicule automobile (40), lequel comprend un dispositif d'estimation de qualité (41) selon la revendication 10.
